# EUROPEAN PATENT SPECIFICATION

(11) **EP 2 854 348 B1**
(45) Date of publication and mention of the grant of the patent: **28.12.2016**
(21) Application number: 12877251.4
(22) Date of filing: 06.08.2012
(51) Int. Cl.: G06F 17/30, H04L 12/66

(54) **INTERFACE DISPLAY METHOD AND SYSTEM OF HOME GATEWAY APPLICABLE TO MULTIPLE DISPLAY TYPES**
VERFAHREN UND SYSTEM ZUR SCHNITTSTELLENANZEIGE EINES AUF MEHRERE ANZEIGETYPEN ANWENDBAREN HEIM-GATEWAYS
PROCÉDÉ ET SYSTÈME D'AFFICHAGE D'INTERFACE DE PASSERELLE DOMESTIQUE APPLICABLE À TYPES D'AFFICHAGE MULTIPLES

(30) Priority: 21.05.2012 CN 201210157770
(43) Date of publication of application: 01.04.2015
(73) Proprietor: ZTE Corporation, Shenzhen, Guangdong 518057 (CN)
(72) Inventor: YU, Hui, Shenzhen Guangdong 518057 (CN)
(74) Representative: Brevalex
(86) International application number: PCT/CN2012/079733
(87) International publication number: WO 2013/174080

(56) References cited:
- WO-A2-02/27543
- CN-A- 101 178 717
- CN-A- 101 383 789
- CN-A- 101 764 767
- US-A1- 2008 139 191
- US-A1- 2012 047 199
- US-A1- 2012 081 390
- US-B2- 7 234 111

## Description

### TECHNICAL FIELD

The disclosure relates to the field of interface display, and more particularly to an interface display method and system for a home gateway applicable to various display types.

### BACKGROUND

Home gateway is defined to be an intelligent gateway serving between a networked information device used at home and an intelligent broadband access network. As a physical interface mainly for connecting all external access networks to a family and connecting a home network with the outside network, the home gateway serves as a platform for a residential user to obtain various home services (including existing services and the services which will be available in future).

For almost each currently available home gateway-class device, the interface display and function control are implemented in a manner that an external computer or another device visits the management page of a gateway via a home network. As technologies advance and the requirement from customers for product experience gets higher, a new home gateway-class product equipped with a liquid crystal display screen comes out, besides, some home gateways which are integrated with a digital high-definition interface or an audio and video separated interface can be connected with a television to present output interfaces through the screen of the television, resulting in a problem that it is necessary to develop a set of software for each output screen in a home gateway-class device equipped with a plurality of output screens so as to provide correct display in different output scenarios. Since there are three sets of functions and interfaces, labor cost is increased, user experience is degraded, and potential hazards may be caused to the software quality of the product.

US 2008/0139191 discusses a system which includes a mobile device and an optimization server. The mobile device is capable of transmitting request data that includes a requested webpage and identification data. The optimization server is configured to receive response data that corresponds to the requested data from a content server, to adapt the response data based on the identification data, and to transmit the adapted response data to the mobile device.

### SUMMARY

The embodiments of the disclosure provide an interface display method and system for a home gateway applicable to various display types to address the problem in the conventional art that a plurality of sets of software have to be developed for a home gateway product equipped with a plurality of output screens according to different display types.

To achieve the foregoing purpose, an interface display method for a home gateway applicable to various display types is provided, as recited in claim 1.

According to another aspect of the present application, an interface display method for a home gateway applicable to various display types is provided, as recited in claim 4.

An interface display system for a home gateway applicable to various display types is also provided, as recited in claim 7.

According to another aspect of the present application, an interface display system for a home gateway applicable to various display types is provided, as recited in claim 10.

Compared with the conventional art, the method and system for a home gateway applicable to various display types provided herein guarantee interface uniformity and convert interface display more conveniently and rapidly by determining the display type information corresponding to an output screen according to a page request sent by an HTTP browser and converting the original page into a standard active script page adaptive to the current display type according to the display type information.

### BRIEF DESCRIPTION OF THE DRAWINGS

Fig. 1 is a flowchart illustrating a first embodiment of an interface display method for a home gateway applicable to various display types provided herein;
Fig. 2 is a flowchart illustrating an interface display conversion step included in a second embodiment of the interface display method for a home gateway applicable to various display types provided herein;
Fig. 3 is a flowchart illustrating a third embodiment of the interface display method for a home gateway applicable to various display types provided herein;
Fig. 4 is a flowchart illustrating a specific page making process implemented by an interface display service process;
Fig. 5 is a flowchart illustrating the generation of an interface element contained in an interface element library;
Fig. 6 is a block diagram illustrating the structure of a first embodiment of an interface display system for a home gateway applicable to various display types provided herein;
Fig. 7 is a block diagram illustrating the structure of a second embodiment of the interface display system for a home gateway applicable to various display types provided herein;
Fig. 8 is a block diagram illustrating the structure of a third embodiment of the interface display system for a home gateway applicable to various display types provided herein; and
Fig. 9 is a block diagram illustrating the structure of a fourth embodiment of the interface display system for a home gateway applicable to various display types provided herein.

### DETAILED DESCRIPTION

The object, the technical solution and the advantages of the disclosure will become more apparent from the following detailed description of specific embodiments when read in conjunction with accompanying drawings.

The specific implementation mode of the disclosure, which is not limited to the following description, is described below with reference to accompanying drawings.

An interface display method and system for a home gateway applicable to various display types are provided in the disclosure which overcome the defect that it is needed to develop a plurality of sets of interface software for a home gateway equipped with a plurality of output screens and which, by adopting a set of unified interface display system and automatically making a corresponding interface according to features of the currently connected output screens and a built-in rule, maximize the uniformity of interfaces.

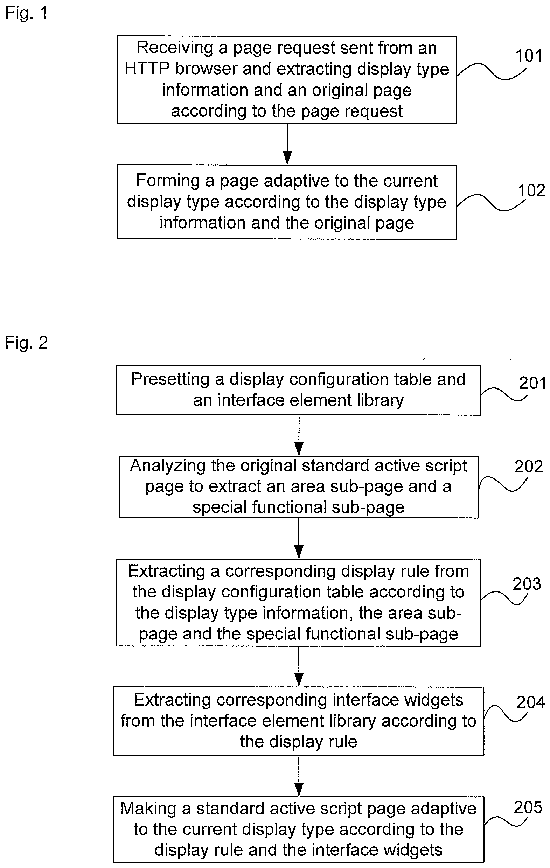

As shown in Fig. 1, a first embodiment of the interface display method for a home gateway applicable to various display types provided herein includes the following steps:
an original page extraction step 101 of receiving a page request sent from an HTTP browser and extracting display type information and an original page according to the page request; and
an interface display conversion step 102 of forming a page adaptive to the current display type according to the display type information and the original page.

In the first embodiment of the interface display method for a home gateway applicable to various display types provided herein, display type information corresponding to an output screen may be determined according to a page request sent by an HTTP browser, and an original page may be converted to a page adaptive to the current display type according to the display type information, thus overcoming the defect that existing home gateway equipped with a plurality of output screens needs a plurality of sets of interface software and guaranteeing interface uniformity while converting interface display more conveniently and rapidly.

The HTTP browser includes an internal HTTP browser built-in the home gateway and/or an external HTTP browser of an electronic device connected with the home gateway.

The external HTTP browser is a universal page browser based on World Wide Web Consortium (W3C) standards and is provided by the manufacturer of a browser or the manufacturer of a computer, a mobile telephone or another device; the device of the user, for example, the computer of the user, is connected with a home local area network provided by a home gateway to visit a predefined browser address via the external HTTP browser to visit and parse the webpage of the home gateway.

The internal HTTP browser is an embedded HTTP browser which runs on the home gateway as a process and is output to the liquid crystal display screen of the home gateway or a television output port.

The display via the liquid crystal display screen of the home gateway and the display by the home gateway via a television output port can be both considered as a local display by the home gateway, which are realized by executing a program in the software/hardware environment inside the home gateway, thus, the two kinds of screen output require the internal HTTP browser of the home gateway to visit a page. Such an internal HTTP browser is related to an embedded graphical programming environment and is difficult to transplant. However, the current mainstream embedded graphical environments for a home gateway only include embedded graphical interface editor (QTE) and Android in which an HTTP browser works nearly perfectly. After the home gateway is electrified and initialized, two internal HTTP browser are started to output one internal HTTP browser to the liquid crystal display screen of the home gateway and output the other internal HTTP browser to a television output interface, and the two internal HTTP browser both visit a defaulted address after being started.

In the implementation of the method, in the original page extraction step, extracting display type information and an original page according to the page request includes:
recording display type information according to the HTTP protocol information contained in the page request; and
finding the requested page from the virtual host directory of the home gateway according to the page request.

A second embodiment of the interface display method for a home gateway applicable to various display types provided herein is based on the first embodiment of the interface display method for a home gateway applicable to various display types provided herein.

As shown in Fig. 2, in the second embodiment of the interface display method for a home gateway applicable to various display types provided herein, the original page extraction step includes receiving a page request sent from an HTTP browser and extracting display type information and an original standard active script page according to the page request.

The interface display conversion step includes:
Step 201: presetting a display configuration table and an interface element library; wherein
display rules corresponding to the area sub-pages and the special functional sub-pages under each display type are stored in the display configuration table; and
a plurality of interface widgets are stored in the interface element library;
Step 202: analyzing the original standard active script page to extract an area sub-page and a special functional sub-page;
Step 203: extracting a corresponding display rule from the display configuration table according to the display type information, the area sub-page and the special functional sub-page;
Step 204: extracting corresponding interface widgets from the interface element library according to the display rule; and
Step 205: making a standard active script page adaptive to the current display type according to the display rule and the interface widgets.

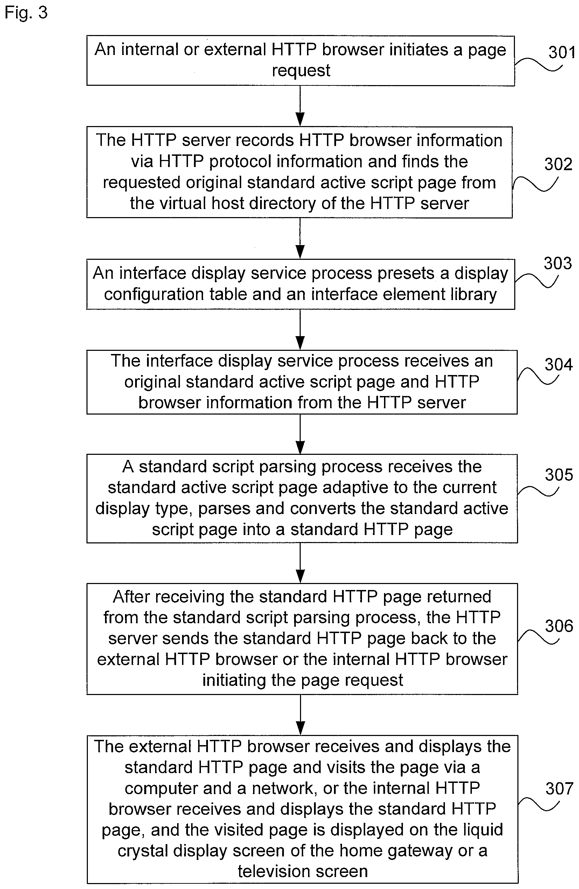

As shown in Fig. 3, a third embodiment of the interface display method for a home gateway applicable to various display types provided herein includes the following steps:
Step 301: a user accesses the internal network of the home gateway via a computer and a network cable, initiates a page request using the external HTTP browser of the computer or an internal HTTP browser which is displayed on a television output port or an liquid crystal display screen of the home gateway;
Step 302: the HTTP server in the home gateway receives a page request from the external HTTP browser or the internal HTTP browser, records HTTP browser information via HTTP protocol information and finds the requested original standard active script page from the virtual host directory of the HTTP server, wherein the original standard active script page may be a Hypertext Preprocessor (PHP) page, a Java Server Page (JSP), an Active Server Page (ASP) and the like, and the HTTP browser information includes display type information;
Step 303: an interface display service process presets a display configuration table and an interface element library; wherein
display rules corresponding to the area sub-pages and the special functional sub-pages under each display type are stored in the display configuration table; and
a plurality of interface widgets are stored in the interface element library;
Step 304: the interface display service process receives an original standard active script page and HTTP browser information from the HTTP server;
the interface display service process determines which kind of browser of which kind of screen sends the page request according to the display type information, searches the display configuration table for the display rule corresponding to the display type information, searches the interface element table to extract desired interface widgets from the interface element table and assembles the interface widgets into a standard active script page adaptive to the current display type;
Step 305: a standard script parsing process receives the standard active script page adaptive to the current display type, parses and converts the standard active script page into a standard HTTP page and returns the standard HTTP page to the HTTP server;
Step 306: after receiving the standard HTTP page returned from the standard script parsing process, the HTTP server sends the standard HTTP page back to the external HTTP browser or the internal HTTP browser which initiated the page request;
Step 307: the external HTTP browser receives and displays the standard HTTP page and visits the page via a computer and a network, or the internal HTTP browser receives and displays the standard HTTP page, and a visited page is displayed on the liquid crystal display screen of the home gateway or a television screen.

In the third embodiment of the interface display method for a home gateway applicable to various display types, the sequence of Step 304 and Step 305 can be exchanged, that is, script analysis may be carried out before or after interface conversion.

In the third embodiment, the display configuration table is a table for the interface display service process to make a query, the table including one or more display rules; the display rule indicates which interface page should be output when a page request is output from a certain output screen or a certain HTTP browser. The display rule not only puts forward requirements on display position, layout and size, but also indicates the functions that can be provided by an output screen. For example, as the liquid crystal display screen of a home gateway can not be large in size and not excellent in display quality, some entertainment functions, such as a video play function, cannot be displayed when visited by a liquid crystal display screen browser.

In the third embodiment, the interface element library is a software library consisting of a great many of scripts or HTTP code segments, each display or function of the home gateway is packaged into a segment of function, and if it is further needed to control lower-layer hardware, for example, open a radio function or monitor a download rate, then the operation needs to be compiled into a library using another substrate language and called using a script code segment. In this way, when several functions are needed, code segments are extracted from the interface element library and added to an interface to be assembled. It should be noted that almost all these interface elements are not allowed to be located using absolute coordinates so as to be adaptive to screens of different sizes.

A fourth embodiment of the interface display method for a home gateway applicable to various display types provided herein includes the following steps:
an original page extraction step of receiving a page request sent from an HTTP browser and extracting display type information and an original standard active script page according to the page request;
a script parsing step of parsing the original standard active script page to generate an original standard HTTP page;
an interface display conversion step including:
   presetting a display configuration table and an interface element library, wherein
      display rules corresponding to the area sub-pages and the special functional sub-pages under each display type are stored in the display configuration table, and
      a plurality of interface widgets are stored in the interface element library, analyzing the original standard HTTP page and extracting an area sub-page and a special functional sub-page,
   extracting a corresponding display rule from the display configuration table according to the display type information, the area sub-page and the special functional sub-page,
   extracting corresponding interface widgets from the interface element library according to the display rule, and
   making a standard HTTP page adaptive to the current display type according to the display rule and the interface widgets; and
a display step of outputting the standard HTTP page to the HTTP browser for the HTTP browser to display the standard HTTP page.

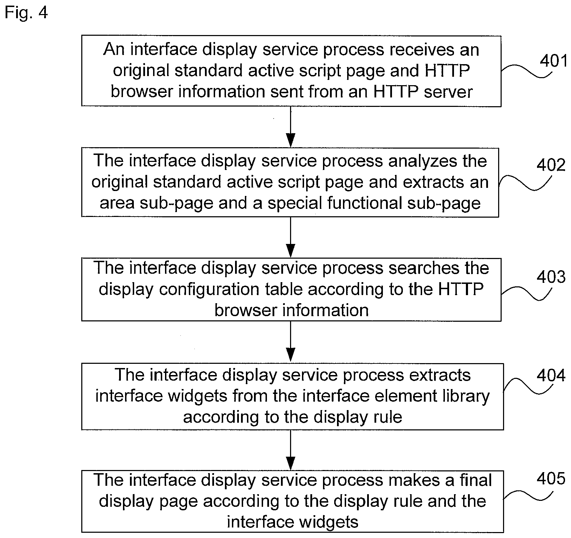

As shown in Fig. 4, according to a specific embodiment, a specific page assembling flow completed by the interface display service process includes:
Step 401: the interface display service process receives the original standard active script page and the HTTP browser information sent from the HTTP server, wherein
the HTTP browser information includes display type information and the window size of the browser;
the display type information only indicates whether or not an output screen is the liquid crystal display screen of a computer, or the liquid crystal display screen of the home gateway, or the output screen of a television;
the content of the original standard active script page includes the area sub-pages of the page, including the head, the body and the footer of the page, and sub-pages of specific functional areas and simple HTTP elements needing no conversion;
Step 402: the interface display service process analyzes the original standard active script page and extracts an area sub-page and a special functional sub-page;
the interface display service process can be implemented using any compiled or interpreted programming language and finally run as an independent process or as a plug-in of the HTTP server or as a standard dynamic script program;
the interface display service process is preferably realized using a suite of active script page programs, for example, PHP, JSP or ASP to achieve the following advantage that the interface display service process can execute an interface display service by means of a standard dynamic script parsing service and can be directly embedded into existing HTTP server and a standard script analysis service plug-in for use as the connection with the HTTP server is excellent;
Step 403: the interface display service process searches the display configuration table according to the HTTP browser information;
the display configuration table is a multi-level two-dimensional table, in other words, the combination of a plurality of associated tables.
the first-level table of the display configuration table only has three entries, that is, when a visit is performed by the external HTTP browser, or when a display is present by the liquid crystal display screen of the home gateway, or when an output is implemented through connection with a television, second-level tables corresponding to the entries in the first-level table should be looked up by the display rule corresponding to the entries in the first-level table. It can be seen that three second-level tables are needed, and the number of the entries contained in each of the second-level tables is not fixed and the content in each of the second-level tables includes the interface display elements and the interface function elements into which a position sub-page or a functional sub-page should be interpreted and also includes information including layout position, window size, image, background image, foreground color, background color, font name and font size; and a display rule corresponding to the display type information can be obtained after the area sub-pages and the special functional sub-pages of the original standard active script page are found in the display configuration table and converted;
Step 404: the interface display service process extracts interface widgets from the interface element library according to the display rule;
the interface widget is a code segment in which a certain display or functional element is encapsulated, for example, an interface widget which indicates operator information and an interface widget which indicates the current signal intensity of a wireless network; an interface widget interacting with the operating system of the home gateway consists of a library of script languages and lower-layer compiled languages so as to overcome the defect that a system service cannot be visited by script languages;
Step 405: the interface display service process constructs the final display page according to the display rule and the interface widgets, the display page, which may be the final HTTP page or an active script page such as a PHP, a JSP, an ASP and so on, is then sent to a standard script parsing process and finally returned to the HTTP browser to be displayed.

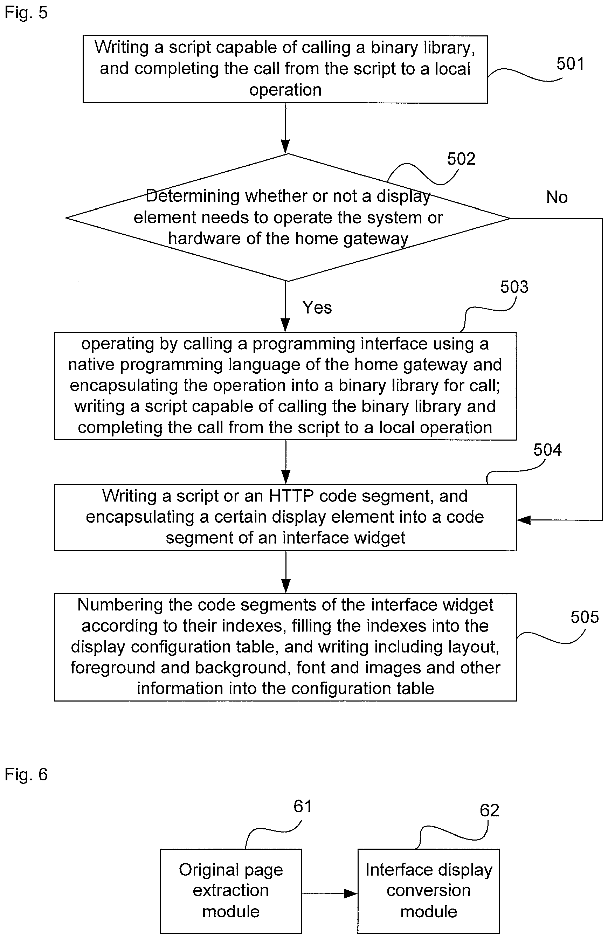

As shown in Fig. 5, the flow of the generation of the interface element in the interface element library includes:
Step 501: display elements are collected according to three display types, and any display element or page can be added when needed during a page making process;
Step 502: whether or not the display element needs to operate the system or hardware of the home gateway, for example, whether or not to open or close a Bluetooth function, is determined, if needing, the flow proceeds to Step 503, otherwise, the flow proceeds to Step 504;
Step 503: an operation is implemented by a programming interface which is called using a native programming language of the home gateway, and the operation is encapsulates into a binary library for call; a script capable of calling the binary library is written, and the call from the script to a local operation is made;
Step 504: a script or an HTTP code segment is written, and a certain display element is encapsulated into a code segment of an interface widget;
Step 505: code segments of the interface widget are numbered according to their indexes, the indexes are filled into the display configuration table, and information, including layout, foreground and background, font and images are written into the configuration table.

As shown in Fig. 6, a first embodiment of the interface display system for a home gateway applicable to various display types provided herein includes:
an original page extraction module 61 configured to receive a page request sent from an HTTP browser and extract display type information and an original page according to the page request; and
an interface display conversion module 62 configured to form a page adaptive to the current display type according to the display type information and the original page.

In accordance with a specific embodiment, the original page extraction module includes a receiving unit, a display type information extraction unit and an original page extraction unit, wherein
the receiving unit is configured to receive the page request sent by the HTTP browser;
the display type information extraction unit is configured to record display type information according to the HTTP protocol information contained in the page request; and
the original page extraction unit configured to find the requested original page from the virtual host directory of the home gateway according to the page request.

A second embodiment of the interface display system for a home gateway applicable to various display types provided herein is based on the first embodiment of the interface display system for a home gateway applicable to various display types provided herein.

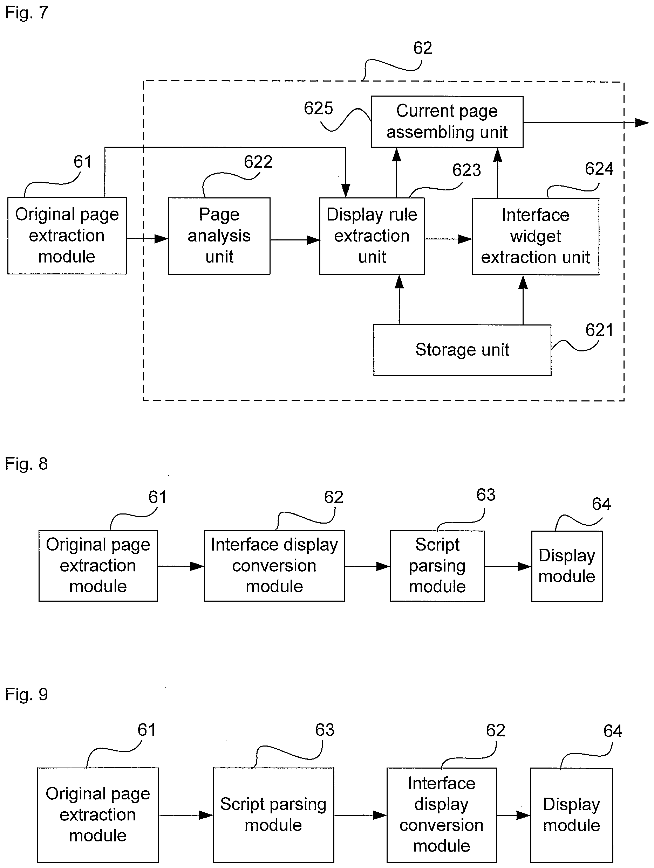

As shown in Fig. 7, in the second embodiment of the interface display system for a home gateway applicable to various display types provided herein,
the original page extraction module 61 is configured to receive a page request sent from the HTTP browser and extract display type information and an original standard active script page according to the page request; and
the interface display conversion module 62 includes:
a storage unit 621 in which a display configuration table and an interface element library are stored, wherein display rules corresponding to the area sub-pages and the special functional sub-pages under each display type are stored in the display configuration table, and a plurality of interface widgets are stored in the interface element library;
a page analysis unit 622 configured to analyze the original standard active script page and extract an area sub-page and a special functional sub-page;
a display rule extraction unit 623 configured to extract, from the display configuration table, a corresponding display rule according to the display type information, the area sub-page and the special functional sub-page;
an interface widget extraction unit 624 configured to extract corresponding interface widgets from the interface element library according to the display rule; and
a current page assembling unit 625 configured to make a standard active script page adaptive to the current display type according to the display rule and the interface widgets.

A third embodiment of the interface display system for a home gateway applicable to various display types provided herein is based on the first or second embodiment of the interface display system for a home gateway applicable to various display types provided herein.

As shown in Fig. 8, a third embodiment of the interface display system for a home gateway applicable to various display types provided herein further includes:
a script parsing module 63 configured to parse the standard active script page adaptive to the current display type to generate a standard HTTP page; and
a display module 64 configured to display the HTTP page.

A fourth embodiment of the interface display system for a home gateway applicable to various display types provided herein is based on the first or second embodiment of the interface display system for a home gateway applicable to various display types provided herein.

Fig. 9 is a block diagram illustrating the structure of a fourth embodiment of the interface display system for a home gateway applicable to various display types provided herein.

As shown in Fig. 9, the fourth embodiment of the interface display system for a home gateway applicable to various display types further includes a script parsing module 63 and a display module 64, wherein
the original page extraction module 61 is configured to receive a page request sent from the HTTP browser and extract display type information and an original standard active script page according to the page request; and
the script parsing module 63 is configured to parse the original standard active script page to generate an original standard HTTP page; and
the interface display conversion module 62 includes:
a storage unit in which a display configuration table and an interface element library are stored, wherein display rules corresponding to the area sub-pages and the special functional sub-pages under each display type are stored in the display configuration table, and a plurality of interface widgets are stored in the interface element library;
a page analysis unit configured to analyze the original standard HTTP page and extract an area sub-page and a special functional sub-page;
a display rule extraction unit configured to extract, from the display configuration table, a corresponding display rule according to the display type information, the area sub-page and the special functional sub-page;
an interface widget extraction unit configured to extract corresponding interface widgets from the interface element library according to the display rule; and
a current page assembling unit configured to make a standard HTTP page adaptive to the current display type according to the display rule and the interface widgets; and
the display module 64 is configured to output the standard HTTP page to the HTTP browser for the HTTP browser to display the standard HTTP page.

The interface display method and system for a home gateway adaptive to a plurality of display types provided herein have the following advantages that:
by unifying the interface display of a plurality of output screens, the method and system highly unify the final visual effect presented to a user and therefore improve user experience;
there is only one set of interface program, therefore, only one set of development resources is needed, thus greatly saving the labor cost in software development while guaranteeing the quality of software; and
by separating the upper-layer interface display from the lower-layer embedded graphical environment, a unified interface program adaptive to different embedded graphical environments is developed, thus realizing the platform of the interface development for home gateway-class devices and speeding up the development of new devices.

The mentioned above are merely preferred embodiments of the disclosure but should not be construed as limitation to the protection scope of the disclosure. It should be appreciated by those ordinary skills in the art that a variety of modifications, variations and equivalents can be devised without departing from the scope of the disclosure, and all the modifications, variations and equivalents devised should fall within the protection range of the disclosure.

## Claims

1. An interface display method for a home gateway applicable to various display types, comprising:
receiving a page request sent from a Hypertext Transport Protocol, HTTP, browser and extracting display type information and an original page according to the page request (101); and
forming a page adaptive to a current display type according to the display type information and the original page (102);
**characterized in that**,
after the page request sent by the HTTP browser is received, the method further comprises:
extracting an original standard active script page according to the page request received;
analyzing the original standard active script page to extract an area sub-page and a special functional sub-page;
extracting, according to the display type information, the area sub-page and the special functional sub-page, a corresponding display rule from a preset display configuration table in which display rules are stored corresponding to area sub-pages and special functional sub-pages under each display type;
extracting corresponding interface widgets from a preset interface element library according to the corresponding display rule, wherein a plurality of interface widgets are stored in the preset interface element library;
making a standard active script page adaptive to the current display type according to the corresponding display rule and the corresponding interface widgets;
parsing the standard active script page adaptive to the current display type to generate a standard HTTP page; and
outputting the standard HTTP page to the HTTP browser to display the standard HTTP page.

2. The interface display method for a home gateway applicable to various display types according to claim 1, wherein the HTTP browser includes an internal HTTP browser built in a home gateway and/or an external HTTP browser on an electronic device connected with the home gateway.

3. The interface display method for a home gateway applicable to various display types according to claim 1, wherein extracting the display type information and the original page according to the page request comprises:
recording the display type information according to HTTP protocol information contained in the page request; and
finding the original page requested from a virtual host directory of a home gateway according to the page request.

4. An interface display method for a home gateway applicable to various display types, comprising:
receiving a page request sent from a Hypertext Transport Protocol, HTTP, browser and extracting display type information and an original page according to the page request (101); and
forming a page adaptive to a current display type according to the display type information and the original page (102);
**characterized in that**,,
after the page request sent by the HTTP browser is received, the method further comprises:
extracting an original standard active script page according to the page request received;
parsing the original standard active script page to generate an original standard HTTP page;
analyzing the original standard HTTP page and extracting an area sub-page and a special functional sub-page;
extracting, according to the display type information, the area sub-page and the special functional sub-page, a corresponding display rule from a preset display configuration table in which display rules are stored corresponding to area sub-pages and special functional sub-pages under each display type;
extracting corresponding interface widgets from an interface element library according to the corresponding display rule, wherein a plurality of interface widgets are stored in the interface element library; and
making a standard active script page adaptive to the current display type according to the corresponding display rule and the corresponding interface widgets;
outputting the original standard HTTP page to the HTTP browser to display the standard HTTP page.

5. The interface display method for a home gateway applicable to various display types according to claim 4, wherein the HTTP browser includes an internal HTTP browser built in a home gateway and/or an external HTTP browser on an electronic device connected with the home gateway.

6. The interface display method for a home gateway applicable to various display types according to claim 4, wherein extracting the display type information and the original page according to the page request comprises:
recording the display type information according to HTTP protocol information contained in the page request; and
finding the original page requested from a virtual host directory of a home gateway according to the page request.

7. An interface display system for a home gateway applicable to various display types, comprising an original page extraction module and an interface display conversion module, wherein
the original page extraction module (61) is configured to receive a page request sent from a Hypertext Transport Protocol, HTTP, browser and extract display type information and an original page according to the page request; and
the interface display conversion module (62) is configured to form a page adaptive to a current display type according to the display type information and the original page;
**characterized in that**,
the interface display system further comprises a script parsing module (63) and a display module (64), wherein
the original page extraction module (61) is further configured to extract an original standard active script page according to the page request received; and
the interface display conversion module (62) comprises:
a storage unit (621) in which a display configuration table and an interface element library are stored, wherein display rules corresponding to area sub-pages and special functional sub-pages under each display type are stored in the display configuration table, and a plurality of interface widgets are stored in the interface element library;
a page analysis unit (622) configured to analyze the original standard active script page extracted by the original page extraction module and extract an area sub-page and a special functional sub-page;
a display rule extraction unit (623) configured to extract a corresponding display rule from the display configuration table stored in the storage unit according to the display type information extracted by the original page extraction module and the area sub-page and the special functional sub-page extracted by the page analysis unit;
an interface widget extraction unit (624) configured to extract corresponding interface widgets from the interface element library stored in the storage unit according to the corresponding display rule extracted by the display rule extraction unit; and
a current page assembling unit (625) configured to make a standard active script page adaptive to the current display type according to the corresponding display rule extracted by the display rule extraction unit and the corresponding interface widgets extracted by the interface widget extraction unit;
the script parsing module (63) is configured to parse the standard active script page made by the current assembling unit and adaptive to the current display type to generate a standard HTTP page; and
the display module (64) is configured to display the standard HTTP page generated by the script parsing module.

8. The interface display system for a home gateway applicable to various display types according to claim 7, wherein the HTTP browser includes an HTTP browser built in a home gateway and/or a browser on an electronic device connected with the home gateway.

9. The interface display system for a home gateway applicable to various display types according to claim 7, wherein the original page extraction module comprises:
a receiving unit configured to receive the page request sent by the HTTP browser;
a display type information extraction unit configured to record the display type information according to HTTP protocol information contained in the page request received by the receiving unit; and
an original page extraction unit configured to find the original page requested from a virtual host directory of a home gateway according to the page request received by the receiving unit.

10. An interface display system for a home gateway applicable to various display types, comprising an original page extraction module and an interface display conversion module, wherein
the original page extraction module (61) is configured to receive a page request sent from a Hypertext Transport Protocol, HTTP, browser and extract display type information and an original page according to the page request; and
the interface display conversion module (62) is configured to form a page adaptive to a current display type according to the display type information and the original page;
**characterized in that**,
the interface display system further comprises a script parsing module (63) and a display module(64), wherein
the original page extraction module (61)is further configured to extract an original standard active script page according to the page request received;
the script parsing module(63) is configured to parse the original standard active script page extracted by the original page extraction module to generate an original standard HTTP page; and
the interface display conversion module (62) comprises:
a storage unit (621) in which a display configuration table and an interface element library are stored, wherein display rules corresponding to area sub-pages and special functional sub-pages under each display type are stored in the display configuration table, and a plurality of interface widgets are stored in the interface element library;
a page analysis unit (622) configured to analyze the original standard HTTP page generated by the script parsing module and extract an area sub-page and a special functional sub-page;
a display rule extraction unit (623) configured to extract a corresponding display rule from the display configuration table stored in the storage unit according to the display type information extracted by the original page extraction module and the area sub-page and the special functional sub-page extracted by the page analysis unit;
an interface widget extraction unit (624) configured to extract corresponding interface widgets from the interface element library stored in the storage unit according to the corresponding display rule extracted by the display rule extraction unit; and
a current page assembling unit (625) configured to make a standard HTTP page adaptive to the current display type according to the corresponding display rule extracted by the display rule extraction unit and the corresponding interface widgets extracted by the interface widget extraction unit; and
the display module (64) is configured to output the standard HTTP page made by the current page assembling unit to the HTTP browser to display the standard HTTP page.

11. The interface display system for a home gateway applicable to various display types according to claim 10, wherein the HTTP browser includes an HTTP browser built in a home gateway and/or a browser on an electronic device connected with the home gateway.

12. The interface display system for a home gateway applicable to various display types according to claim 10, wherein the original page extraction module comprises:
a receiving unit configured to receive the page request sent by the HTTP browser;
a display type information extraction unit configured to record the display type information according to HTTP protocol information contained in the page request received by the receiving unit; and
an original page extraction unit configured to find the original page requested from a virtual host directory of a home gateway according to the page request received by the receiving unit.

## Patentansprüche

1. Verfahren zur Schnittstellenanzeige eines auf mehrere Anzeigetypen anwendbaren Heim-Gateways, umfassend die folgenden Schritte: Empfangen einer Seitenanfrage, die von einem Hypertext Transport Protokoll HTTP Browser gesendet wird, und Auswählen von Anzeigetyp-Informationen und einer Originalseite gemäß der Seitenanfrage (101); Bilden einer Seite, die an einen gegenwärtigen Anzeigetyp anpaßbar ist, und zwar gemäß der Anzeigetyp-Information und der ursprünglichen Seite (102), **dadurch gekennzeichnet, daß** nach dem Empfang der Seitenanfrage durch den HTTP Browser das Verfahren die folgenden Schritte aufweist: Auswählen einer originalen, üblichen aktiven Skriptseite gemäß der empfangenen Seitenanfrage; Analysieren der originalen üblichen aktiven Skriptseite, um einen Teilseitenbereich sowie eine spezielle, funktionelle Teilseite auszuwählen; Auswählen gemäß der Anzeigetyp-Information des Teilseitenbereiches und der speziellen funktionalen Teilseite gemäß einer entsprechenden Anzeigevorschrift aus einer vorgegebenen Anzeige-Konfigurationstabelle, in der Anzeigevorschriften gespeichert sind, und zwar gemäß der Teilseitenbereiche und spezieller funktionaler Teilseiten durch jeden Anzeigetyp; Auswählen entsprechender Schnittstellen-Widgets aus einer vorgegebenen Schnittstellen-Elementbibliothek gemäß der entsprechenden Anzeigeregel, wobei mehrere Schnittstellen-Widgets in der vorgegebenen Schnittstellen-Elementbibliothek gespeichert sind; Herstellen einer üblichen aktiven Skriptseite, angepaßt an den gegenwärtigen Anzeigetyp, gemäß der entsprechenden Anzeigeregel und der entsprechenden Schnittstellen-Widgets; Analysieren der üblichen aktiven Skriptseite in Anpassung an den laufenden Anzeigetyp, um eine übliche HTTP-Seite zu erstellen; und Ausgeben der üblichen HTTP-Seite an den HTTP Browser, um die übliche HTTP-Seite anzuzeigen.

2. Verfahren zur Schnittstellenanzeige eines auf mehrere Anzeigetypen anwendbaren Heim-Gateways nach Anspruch 1, **dadurch gekennzeichnet, daß** der HTTP Browser einen inneren HTTP Browser aufweist, der in einem Heim-Gateway eingebaut ist und / oder einen externen HTTP Browser auf einem elektronischen Gerät, das mit dem Heim-Gateway verbunden ist.

3. Verfahren zur Schnittstellenanzeige eines auf mehrere Anzeigetypen anwendbaren Heim-Gateways nach Anspruch 1, **dadurch gekennzeichnet, daß** das Auswählen der Anzeigetyp-Information und der Originalseite gemäß der Seitenanfrage folgende Schritte beinhaltet: Aufzeichnen der Anzeigetyp-Information gemäß der HTTP Protokoll-Information, die in der Seitenanfrage enthalten ist; und Auffinden der Originalseite, die von einem virtuellen Wirtdaten-Verzeichnis eines Heim-Gateways gemäß der Datenanfrage verlangt wird.

4. Verfahren zur Schnittstellenanzeige eines auf mehrere Anzeigetypen anwendbaren Heim-Gateways, umfassend Empfangen einer Seitenanfrage, die von einem Hypertext Transport Protokoll HTTP Browser gesendet wird, und Auswählen von Anzeigetyp-Informationen und einer Originalseite gemäß der Seitenanfrage (101); Bilden einer Seite, die an einen gegenwärtigen Anzeigetyp anpaßbar ist, und zwar gemäß der Anzeigetyp-Information und der ursprünglichen Seite (102), **dadurch gekennzeichnet, daß** nach dem Empfang der Seitenanfrage durch den HTTP Browser das Verfahren die folgenden Schritte aufweist: Auswählen einer originalen, üblichen aktiven Skriptseite gemäß der empfangenen Seitenanfrage; Analysieren der originalen aktiven Standard-Skriptseite zum Erzeugen einer originalen Standard- HTTP Seite; Analysieren der originalen Standard- HTTP Seite und Auswählen eines Teilseitenbereiches von einer speziellen funktionalen Teilseite; Auswählen, gemäß der Anzeigetyp-Information, des Teilseitenbereiches und der speziellen funktionalen Teilseite einer entsprechenden Anzeigeregel von einer vorgegebenen Anzeige-Konfigurationstabelle, in der die Anzeigeregeln enthalten sind, und zwar gemäß den Teilseitenbereichen und der speziellen funktionalen Teilseiten zu jedem Anzeigetyp; Auswählen entsprechender Schnittstellen-Widgets aus einer Schnittstellen-Elementbibliothek gemäß der entsprechenden Anzeigeregel, wobei mehrere Schnittstellen-Widgets in der Schnittstellen-Elementbibliothek gespeichert werden; und Erstellen einer üblichen aktiven Skriptseite, die an den laufenden Anzeigetyp angepaßt ist, und zwar gemäß der entsprechenden Anzeigeregel und der entsprechenden Schnittstellen-Widgets; Ausgeben der originalen üblichen HTTP Seite an den HTTP Browser, um die übliche HTTP Seite anzuzeigen.

5. Verfahren zur Schnittstellenanzeige eines auf mehrere Anzeigetypen anwendbaren Heim-Gateways gemäß Anspruch 4, **dadurch gekennzeichnet, daß** der HTTP Browser einen internen HTTP Browser aufweist, der in einem Heim-Gateway eingebaut ist, und / oder einen externen HTTP Browser in einem elektronischen Gerät, das mit dem Heim-Gateway verbunden ist.

6. Verfahren zur Schnittstellenanzeige eines auf mehrere Anzeigetypen anwendbaren Heim-Gateways nach Anspruch 4, **dadurch gekennzeichnet, daß** das Auswählen der Anzeigetyp-Information und der Originalseite gemäß der Seitenanfrage folgendes umfaßt: Aufzeichnen der Anzeigetyp-Information gemäß der HTTP Protokoll-Information, die in der Seitenanfrage enthalten ist, und Auffinden der Originalseite, die von einem Wirtdatenverzeichnis eines Heim-Gateways verlangt wird, und zwar gemäß der Seitenanfrage.

7. Schnittstellen-Anzeigesystem eines auf mehrere Anzeigetypen anwendbaren Heim-Gateways, umfassend einen Originalseiten-Auswahlmodul und einen Schnittstellen-Anzeigeumwandlungsmodul, wobei der Originalseiten-Auswahlmodul (61) so gebaut ist, daß er eine Seitenanfrage, die von einem Hypertext Transport Protokoll HTTP, Browser empfängt und die Anzeigetyp-Information sowie eine Originalseite gemäß der Seitenanfrage auswählt, und der Schnittstellen-Umwandlungsmodul (62) so gebaut ist, daß eine Seite gebildet wird, die an einen laufenden Anzeigetyp angepaßt ist, und zwar gemäß der Anzeigetyp-Information und der Originalseite, **dadurch gekennzeichnet, daß** das Schnittstellen-Anzeigesystem des weiteren einen Skript-Analysierungsmodul (63) und einen Anzeigemodul (64) aufweist, wobei der Originalseiten-Auswahlmodul (61) so gebaut ist, daß eine ursprüngliche aktive Standard-Skriptseite gemäß der empfangenen Seitenaufforderung ausgewählt wird, und wobei der Schnittstellen-Anzeigeumwandlungsmodul (62) folgendes aufweist: eine Speichereinheit (621), in der eine Anzeige-Konfigurationstabelle und eine Schnittstellen-Elementbibliothek gespeichert werden, wobei Anzeigeregeln entsprechend den Teilseitenbereichen und speziellen funktionellen Teilseiten zu jedem Anzeigetyp in der Anzeige-Konfigurationstabelle gespeichert werden und mehrere Schnittstellen-Widgets in der Schnittstellen-Elementbibliothek gespeichert werden; ferner umfassend eine Seitenanalyseeinheit (622), die so gebaut ist, daß die originale aktive Standard-Skriptseite analysiert wird, die durch den originalen Seitenauswahlmodul ausgewählt wird, und ein Teilseitenbereich sowie eine spezielle funktionale Teilseite ausgewählt werden; des weiteren umfassend eine Anzeigeregel-Auswahleinheit (623), die dazu dient, aus der Anzeige-Konfigurationstabelle eine entsprechende Anzeigeregel auszuwählen, wobei die genannte Tabelle in der Speichereinheit gemäß der Anzeigetyp-Information gespeichert wird, die durch den originalen Speicherauswahlmodul ausgewählt wird sowie den Teilseitenbereich und die spezielle funktionale Teilseite, die durch die Seitenanalyseeinheit ausgewählt wird; des weiteren umfassend eine Schnittstellen-Widget-Auswahleinheit (624), die dazu dient, entsprechende Schnittstellen-Widgets aus der Schnittstellen-Elementbibliothek auszuwählen, die in der Speichereinheit gespeichert werden, und zwar gemäß der entsprechenden Anzeigeregel, ausgewählt durch die Anzeigeregel-Auswahleinheit; und schließlich umfassend eine laufende Seitensammeleinheit (625), die dazu dient, eine aktive Standard-Skriptseite herzustellen, die an einen laufenden Anzeigetyp angepaßt ist, und zwar gemäß der entsprechenden Anzeigeregel, welche durch die Anzeigeregel-Auswahleinheit ausgewählt wird, und die entsprechenden Schnittstellen-Widgets, die von der Schnittstellen-Widget-Auswahleinheit ausgewählt werden; wobei der Skriptanalysemodul (63) dazu dient, die aktive Standard-Skriptseite zu analysieren, die von der laufenden Sammeleinheit gebildet wird und die an den laufenden Anzeigetyp angepaßt ist, um eine Standard-HTTP Seite zu erzeugen; und wobei schließlich der Anzeigemodul (64) dazu dient, die Standard- HTTP Seite anzuzeigen, die von dem Skriptanalysemodul erzeugt wird.

8. Schnittstellen-Anzeigesystem eines auf mehrere Anzeigetypen anwendbaren Heim-Gateways nach Anspruch 7, **dadurch gekennzeichnet, daß** der HTTP Browser einen HTTP Browser aufweist, welcher in einem Heim-Gateway angeordnet ist, und / oder einen Browser in einem elektronischen Gerät, das mit dem Heim-Gateway verbunden ist.

9. Schnittstellen-Anzeigesystem eines auf mehrere Anzeigetypen anwendbaren Heim-Gateways nach Anspruch 7, **dadurch gekennzeichnet, daß** der ursprüngliche Seitenauswahlmodul eine Empfangseinheit aufweist, die dazu dient, die Seitenanfrage zu empfangen, die von dem HTTP Browser gesendet wird; des weiteren eine Anzeigetyp-Informationsausgabeeinheit, die dazu dient, die Anzeigetyp-Information gemäß der HTTP Protokoll-Information aufzunehmen, die in der Seitenanfrage enthalten ist, welche von der Empfangseinheit empfangen wird; und eine Originalseiten-Ausgabeeinheit, die dazu dient, die originale Seite aufzufinden, die von einer virtuellen Wirtbibliothek eines Heim-Gateways verlangt wird, und zwar gemäß der Seitenanfrage, die von der Empfangseinheit empfangen wird.

10. Schnittstellen-Anzeigesystem eines auf mehrere Anzeigetypen anwendbaren Heim-Gateways, umfassend einen Originalseiten-Ausgabemodul und einen Schnittstellen-Anzeigeumwandlungsmodul, wobei der Originalseiten-Ausgabemodul (61) so gebaut ist, daß eine Seitenanfrage empfangen wird, die von einem Hypertext Transport Protokoll, HTTP, Browser gesendet wird sowie eine Anzeigetyp-Information ausgewählt wird und eine Originalseite gemäß der Seitenanforderung; und der Schnittstellen-Anzeigeumwandlungsmodul (62) so gebaut ist, daß eine Seite gebildet wird, die an einen laufenden Anzeigetyp angepaßt ist, und zwar gemäß der Anzeigetyp-Information und der Originalseite, **dadurch gekennzeichnet, daß** das Schnittstellen-Anzeigesystem des weiteren einen Typanalysemodul (63) und einen Anzeigemodul (64) aufweist, wobei der Originalseiten-Ausgabemodul (61) des weiteren dazu dient, eine originale aktive Standard-Skriptseite gemäß der Seitenaufforderung auszugeben; wobei des weiteren der Skriptanalysemodul (63) dazu dient, die originale aktive Standard-Skriptseite zu analysieren, die von dem originalen Seitenausgabemodul ausgegeben wird, um eine originale Standard- HTTP Seite zu erzeugen; und der SchnittstellenAnzeige-Umwandlungsmodul (62) folgendes umfaßt: eine Speichereinheit (621), in der eine Anzeigekonfigurationstabelle und eine Schnittstellenelementbibliothek enthalten sind, wobei Anzeigeregeln, die dem Teilseitenbereich entsprechen, und speziell funktionalen Teilseiten für jeden Anzeigetyp in der Anzeigeumwandlungstabelle gespeichert werden, und mehrere Schnittstellen-Widgets in der Schnittstellen-Elementbibliothek gespeichert werden; des weiteren umfassend eine Seitenanalyseeinheit (622), die dazu dient, die originale Standard- HTTP Seite zu analysieren, die von dem SkriptAnalysemodul erzeugt wird, und eine Bereichs-Teilseite sowie eine spezielle funktionale Teilseite auszuwählen; des weiteren umfassend eine Anzeigeregel-Ausgabeeinheit (623), die dazu dient, eine entsprechende Anzeigeregel von der Anzeige-Konfigurationstabelle auszugeben, die in der Speichereinheit gespeichert wird, und zwar gemäß der Anzeigetyp-Information, die von dem Originalseiten-Ausgabemodul ausgegeben wird sowie dem Teilseitenbereich und der speziellen funktionalen Teilseite, die von der Seitenanalyseeinheit ausgegeben wird; des weiteren umfassend eine Schnittstellen-Widget-Ausgabeeinheit (624), die dazu dient, entsprechende Schnittstellen-Widgets von der Schnittstellen-Elementbibliothek auszugeben, welche in der Speichereinheit gespeichert sind, und zwar entsprechend der Anzeigeregel, die von der Anzeigeregel-Ausgabeeinheit ausgegeben wird; und schließlich umfassend eine laufende Seitensammeleinheit (625), die dazu dient, die Standard- HTTP Seite an den laufenden Anzeigetyp anzupassen, und zwar gemäß der entsprechenden Anzeigeregel, die von der Anzeigeregel-Ausgabeeinheit ausgegeben wird, und den entsprechenden Schnittstellen-Widgets, die von der Schnittstellen-Widget-Ausgabeeinheit ausgegeben werden, wobei schließlich der Anzeigemodul (64) dazu dient, die Standard-HTTP Seite auszugeben, welche von der laufenden Seitensammeleinheit für den HTTP Browser hergestellt wird, um die Standard- HTTP Seite anzuzeigen.

11. Schnittstellen-Anzeigesystem eines auf mehrere Anzeigetypen anwendbaren Heim-Gateways nach Anspruch 10, **dadurch gekennzeichnet, daß** der HTTP Browser einen HTTP Browser aufweist, der in einem Heim-Gateway eingebaut ist, und / oder einen Browser in einem elektronischen Gerät, das mit dem Heim-Gateway verbunden ist.

12. Schnittstellen-Anzeigesystem eines auf mehrere Anzeigetypen anwendbaren Heim-Gateways nach Anspruch 10, **dadurch gekennzeichnet, daß** der originale Seitenauswahlmodul folgendes aufweist: eine Empfangseinheit, die dazu dient, die Seitenanfrage zu empfangen, die durch den HTTP Browser gesendet wird; eine Anzeigetyp-Informationsausgabeeinheit, die dazu dient, die Anzeigetyp-Information gemäß der HTTP Protokoll-Information aufzuzeichnen, welche in der Seitenanfrage enthalten ist, die von der Empfangseinheit empfangen wird; und eine Originalseiten-Ausgabeeinheit, die dazu dient, die Originalseite aufzufinden, die von einem virtuellen Wirtdatenverzeichnis eines Heim-Gateways verlangt wird, und zwar gemäß der von der Empfangseinheit empfangenen Seitenanfrage.

## Revendications

1. Procédé d'affichage d'interface pour une passerelle domestique applicable à divers types d'affichages, comprenant les étapes suivantes :
recevoir une demande de page envoyée à partir d'un navigateur de protocole de transport hypertexte, HTTP, et extraire des informations de types d'affichages et une page d'origine selon la demande de page (101); et
former une page adaptative à un type d'affichage en cours selon les informations de types d'affichages et la page d'origine (102) ;
**caractérisé en ce que**,
après réception de la demande de page envoyée par le navigateur HTTP, le procédé comprend en outre les étapes suivantes :
extraire une page de script active standard d'origine selon la demande de page reçue;
analyser la page de script active standard d'origine en vue d'extraire une sous-page de zone et une sous-page fonctionnelle spéciale;
extraire, selon les informations de types d'affichages, la sous-page de zone et la sous-page fonctionnelle spéciale, une règle d'affichage correspondante d'une table de configuration d'affichage prédéfinie dans laquelle des règles d'affichage sont stockées lesquelles correspondent à des sous-pages de zone et des sous-pages fonctionnelles spéciales sous chaque type d'affichage;
extraire des composantes d'interface correspondants d'une bibliothèque d'éléments d'interfaces prédéfinie selon la règle d'affichage correspondante, dans lequel une pluralité de composantes d'interface est stockée dans la bibliothèque d'éléments d'interfaces prédéfinie;
rendre une page de script active standard adaptative au type d'affichage en cours selon la règle d'affichage correspondante et les composantes d'interface correspondants;
analyser la page de script active standard adaptative au type d'affichage en cours en vue de générer une page HTTP standard; et
délivrer en sortie la page HTTP standard au navigateur HTTP en vue d'afficher la page HTTP standard.

2. Procédé d'affichage d'interface pour une passerelle domestique applicable à divers types d'affichages selon la revendication 1, dans lequel le navigateur HTTP inclut un navigateur HTTP interne intégré dans une passerelle domestique et/ou un navigateur HTTP externe sur un dispositif électronique connecté à la passerelle domestique.

3. Procédé d'affichage d'interface pour une passerelle domestique applicable à divers types d'affichages selon la revendication 1, dans lequel l'étape consistant à extraire les informations de types d'affichages et la page d'origine selon la demande de page comprend les étapes suivantes :
enregistrer les informations de types d'affichages selon des informations de protocole HTTP contenues dans la demande de page; et
rechercher la page d'origine demandée à partir d'un répertoire d'hôte virtuel d'une passerelle domestique selon la demande de page.

4. Procédé d'affichage d'interface pour une passerelle domestique applicable à divers types d'affichages, comprenant les étapes suivantes:
recevoir une demande de page envoyée à partir d'un navigateur de protocole de transport hypertexte, HTTP, et extraire des informations de types d'affichages et une page d'origine selon la demande de page (101); et
former une page adaptative à un type d'affichage en cours selon les informations de types d'affichages et la page d'origine (102) ;
**caractérisé en ce que** :
après réception de la demande de page envoyée par le navigateur HTTP, le procédé comprend en outre les étapes suivantes :
extraire une page de script active standard d'origine selon la demande de page reçue;
analyser syntaxiquement la page de script active standard d'origine en vue de générer une page HTTP standard d'origine;
analyser la page HTTP standard d'origine et extraire une sous-page de zone et une sous-page fonctionnelle spéciale;
extraire, selon les informations de types d'affichages, la sous-page de zone et la sous-page fonctionnelle spéciale, une règle d'affichage correspondante d'une table de configuration d'affichage prédéfinie dans laquelle des règles d'affichage sont stockées lesquelles correspondent à des sous-pages de zone et des sous-pages fonctionnelles spéciales sous chaque type d'affichage;
extraire des composantes d'interface correspondants d'une bibliothèque d'éléments d'interfaces selon la règle d'affichage correspondante, dans lequel une pluralité de composantes d'interface est stockée dans la bibliothèque d'éléments d'interfaces; et
rendre une page de script active standard adaptative au type d'affichage en cours selon la règle d'affichage correspondante et les composantes d'interface correspondants;
délivrer en sortie la page HTTP standard d'origine au navigateur HTTP en vue d'afficher la page HTTP standard.

5. Procédé d'affichage d'interface pour une passerelle domestique applicable à divers types d'affichages selon la revendication 4, dans lequel le navigateur HTTP inclut un navigateur HTTP interne intégré dans une passerelle domestique et/ou un navigateur HTTP externe sur un dispositif électronique connecté à la passerelle domestique.

6. Procédé d'affichage d'interface pour une passerelle domestique applicable à divers types d'affichages selon la revendication 4, dans lequel l'étape consistant à extraire les informations de types d'affichages et la page d'origine selon la demande de page comprend les étapes suivantes :
enregistrer les informations de types d'affichages selon des informations de protocole HTTP contenues dans la demande de page; et
rechercher la page d'origine demandée à partir d'un répertoire d'hôte virtuel d'une passerelle domestique selon la demande de page.

7. Système d'affichage d'interface pour une passerelle domestique applicable à divers types d'affichages, comprenant un module d'extraction de page d'origine et un module de conversion d'affichage d'interface, dans lequel
le module d'extraction de page d'origine (61) est configuré de manière à recevoir une demande de page envoyée à partir d'un navigateur de protocole de transport hypertexte, HTTP, et à extraire des informations de types d'affichages et une page d'origine selon la demande de page; et
le module de conversion d'affichage d'interface (62) est configuré de manière à former une page adaptative à un type d'affichage en cours selon les informations de types d'affichages et la page d'origine;
**caractérisé en ce que**,
le système d'affichage d' interface comprend en outre un module d'analyse de script (63) et un module d'affichage (64), dans lequel
le module d'extraction de page d'origine (61) est en outre configuré de manière à extraire une page de script active standard d'origine selon la demande de page reçue; et
le module de conversion d'affichage d'interface (62) comprend :
une unité de stockage (621) dans laquelle une table de configuration d'affichage et une bibliothèque d'éléments d'interfaces sont stockées, dans lequel des règles d'affichage correspondant à des sous-pages de zone et des sous-pages fonctionnelles spéciales sous chaque type d'affichage sont stockées dans la table de configuration d'affichage, et une pluralité de composants d'interface est stockée dans la bibliothèque d'éléments d' interfaces ;
une unité d'analyse de page (622) configurée de manière à analyser la page de script active standard d'origine extraite par le module d'extraction de page d'origine et à extraire une sous-page de zone et une sous-page fonctionnelle spéciale;
une unité d'extraction de règle d'affichage (623) configurée de manière à extraire une règle d'affichage correspondante de la table de configuration d'affichage stockée dans l'unité de stockage selon les informations de types d'affichages extraites par le module d'extraction de page d'origine et la sous-page de zone et la sous-page fonctionnelle spéciale extraites par l'unité d'analyse de page;
une unité d'extraction de composantes d'interface (624) configurée de manière à extraire des composantes d'interface correspondants de la bibliothèque d'éléments d'interfaces stockée dans l'unité de stockage selon la règle d'affichage correspondante extraite par l'unité d'extraction de règle d'affichage; et
une unité d'assemblage de page en cours (625) configurée de manière à rendre une page de script active standard adaptative au type d'affichage en cours selon la règle d'affichage correspondante extraite par l'unité d'extraction de règle d'affichage et les composants d'interface correspondants extraits par l'unité d'extraction de composants d'interface;
le module d'analyse syntaxique de script (63) est configuré de manière à analyser syntaxiquement la page de script active standard réalisée par l'unité d'assemblage de page en cours et adaptative au type d'affichage en cours en vue de générer une page HTTP standard; et
le module d'affichage (64) est configuré de manière à afficher la page HTTP standard générée par le module d'analyse de script.

8. Système d'affichage d'interface pour une passerelle domestique applicable à divers types d'affichages selon la revendication 7, dans lequel le navigateur HTTP comprend un navigateur HTTP intégré dans une passerelle domestique et/ou un navigateur sur un dispositif électronique connecté à la passerelle domestique.

9. Système d'affichage d'interface pour une passerelle domestique applicable à divers types d'affichages selon la revendication 7, dans lequel le module d'extraction de page d'origine comprend :
une unité de réception configurée de manière à recevoir la demande de page envoyée par le navigateur HTTP ;
une unité d'extraction d'informations de types d'affichages configurée de manière à enregistrer les informations de types d'affichages selon des informations de protocole HTTP contenues dans la demande de page reçue par l'unité de réception; et
une unité d'extraction de page d'origine configurée de manière à rechercher la page d'origine demandée à partir d'un répertoire d'hôte virtuel d'une passerelle domestique selon la demande de page reçue par l'unité de réception.

10. Système d'affichage d'interface pour une passerelle domestique applicable à divers types d'affichages, comprenant un module d'extraction de page d'origine et un module de conversion d'affichage d'interface, dans lequel
le module d'extraction de page d'origine (61) est configuré de manière à recevoir une demande de page envoyée à partir d'un navigateur de protocole de transport hypertexte, HTTP, et à extraire des informations de types d'affichages et une page d'origine selon la demande de page; et
le module de conversion d'affichage d'interface (62) est configuré de manière à former une page adaptative à un type d'affichage en cours selon les informations de types d'affichages et la page d'origine;
**caractérisé en ce que**,
le système d'affichage d'interface comprend en outre un module d'analyse de script (63) et un module d'affichage (64), dans lequel
le module d'extraction de page d'origine (61) est en outre configuré de manière à extraire une page de script active standard d'origine selon la demande de page reçue;
le module d'analyse syntaxique de script (63) est configuré de manière à analyser syntaxiquement la page de script active standard d'origine extraite par le module d'extraction de page d'origine en vue de générer une page HTTP standard d'origine; et
le module de conversion d'affichage d'interface (62) comprend :
une unité de stockage (621) dans laquelle une table de configuration d'affichage et une bibliothèque d'éléments d'interfaces sont stockées, dans lequel des règles d'affichage correspondant à des sous-pages de zone et des sous-pages fonctionnelles spéciales sous chaque type d'affichage sont stockées dans la table de configuration d'affichage, et une pluralité de composants d'interface est stockée dans la bibliothèque d'éléments d' interfaces ;
une unité d'analyse de page (622) configurée de manière à analyser la page HTTP standard d'origine générée par le module d'analyse syntaxique de script et à extraire une sous-page de zone et une sous-page fonctionnelle spéciale;
une unité d'extraction de règle d'affichage (623) configurée de manière à extraire une règle d'affichage correspondante de la table de configuration d'affichage stockée dans l'unité de stockage selon les informations de types d'affichages extraites par le module d'extraction de page d'origine et la sous-page de zone et la sous-page fonctionnelle spéciale extraites par l'unité d'analyse de page;
une unité d'extraction de composants d'interface (624) configurée de manière à extraire des composants d'interface correspondants de la bibliothèque d'éléments d'interfaces stockée dans l'unité de stockage selon la règle d'affichage correspondante extraite par l'unité d'extraction de règle d'affichage; et
une unité d'assemblage de page en cours (625) configurée de manière à rendre une page HTTP standard adaptative au type d'affichage en cours selon la règle d'affichage correspondante extraite par l'unité d'extraction de règle d'affichage et les composants d'interface correspondants extraits par l'unité d'extraction de composants d'interface;
le module d'affichage (64) est configuré de manière à délivrer en sortie la page HTTP standard réalisée par l'unité d'assemblage de page en cours au navigateur HTTP en vue d'afficher la page HTTP standard.

11. Système d'affichage d'interface pour une passerelle domestique applicable à divers types d'affichages selon la revendication 10, dans lequel le navigateur HTTP comprend un navigateur HTTP intégré dans une passerelle domestique et/ou un navigateur sur un dispositif électronique connecté à la passerelle domestique.

12. Système d'affichage d'interface pour une passerelle domestique applicable à divers types d'affichages selon la revendication 10, dans lequel le module d'extraction de page d'origine comprend :
une unité de réception configurée de manière à recevoir la demande de page envoyée par le navigateur HTTP ;
une unité d'extraction d'informations de types d'affichages configurée de manière à enregistrer les informations de types d'affichages selon des informations de protocole HTTP contenues dans la demande de page reçue par l'unité de réception; et
une unité d'extraction de page d'origine configurée de manière à rechercher la page d'origine demandée à partir d'un répertoire d'hôte virtuel d'une passerelle domestique selon la demande de page reçue par l'unité de réception.
